# EUROPÄISCHE PATENTSCHRIFT

(11) **EP 3 378 730 B1**
(45) Veröffentlichungstag und Bekanntmachung des Hinweises auf die Patenterteilung: **01.06.2022**
(21) Anmeldenummer: 18161400.9
(22) Anmeldetag: 13.03.2018
(51) Int. Cl.: B62B 7/12, B62B 9/26, B62K 27/00, B62J 7/02, B62J 9/20

(54) **FAHRRADANHÄNGER MIT LÖSBAREM TRANSPORTBEHÄLTER**
BICYCLE TRAILER WITH RELEASABLE TRANSPORT CONTAINER
REMORQUE DE BICYCLETTE POURVU DE CONTENEUR DE TRANSPORT AMOVIBLE

(30) Priorität: 22.03.2017 DE 102017106137
(43) Veröffentlichungstag der Anmeldung: 26.09.2018
(73) Patentinhaber: Kettler Alu-Rad GmbH, 50739 Köln (DE)
(72) Erfinder: Fiegl, Thomas, 64367 Mühltal (DE); Pohl, Achim, 64342 Seeheim-Jugenheim (DE)
(74) Vertreter: WSL Patentanwälte Partnerschaft mbB

(56) Entgegenhaltungen:
- DE-A1-102014 109 093
- DE-U1- 9 112 906
- DE-U1- 9 315 021
- DE-U1- 9 319 316

## Beschreibung

Die vorliegende Erfindung gemäß Anspruch 1 betrifft einen Fahrradanhänger, vorzugsweise einen 2-in-1-Kinderwagen-Fahrradanhänger, mit einem Rahmengestell und einer Radaufhängung, wobei das Rahmengestell eine Fahrgastzelle bildet und in der Fahrgastzelle ein Sitz mit einer Rückenlehne angeordnet ist, wobei die Rückenlehne eine Vorderseite und eine Rückseite aufweist.

Fahrradanhänger, insbesondere 2-in-1-Kinderwagen, bei denen der Fahrradanhänger sowohl mit einem Fahrrad gezogen oder auch als Kinderwagen, Jogger oder Buggy verwendet werden kann, werden zum Transportieren von einem oder mehreren Kindern geschoben. Das Kind bzw. die Kinder sitzen auf dem Sitz in der von dem Rahmengestell gebildeten Fahrgastzelle. Je nach Alter der Kinder werden auf Ausflügen weitere Utensilien, wie beispielsweise Verpflegung, Wickeltaschen oder Spielzeug, benötigt, die zusammen mit den Kindern in dem Fahrradanhänger verstaut werden sollen. Gleiches gilt für Einkäufe, die ebenfalls mit dem Fahrradanhänger zusätzlich zu den Kindern transportiert werden sollen. Herkömmliche Fahrradanhänger haben hierzu wenig bis gar keinen Stauraum, sodass die zu transportierenden Waren oftmals zusammen mit den Kindern in dem ersten Bereich der Fahrgastzelle angeordnet werden.

Wieder andere Fahrradanhänger haben fest mit dem Rahmengestell verbundene Taschen, in die die zu transportierenden Güter für einen Transport mit dem Fahrradanhänger eingefüllt werden können. Durch die feste Verbindung der Taschen mit dem Rahmengestell ist es jedoch nicht möglich, die Tasche in einem befüllten Zustand von dem Fahrradanhänger zu trennen und mitzunehmen. Die weiter zu transportierenden Güter müssen zunächst in eine andere Tasche umgefüllt werden, um sie auf Ausflügen mitzunehmen oder nach Hause zu tragen.

Häufig werden daher zusätzliche Taschen an dem Rahmengestell herkömmlicher Fahrradanhänger angebracht. Die zusätzlichen Taschen sind aber meist nur unzureichend an dem Fahrradanhänger befestigt und können sich beim Ziehen des Fahrradanhängers mit einem Fahrrad ungewollt von dem Fahrradanhänger lösen. Auch sind die zusätzlichen Taschen häufig auf der Außenseite des Fahrradanhängers befestigt, sodass die Taschen leicht für Dritte zugänglich oder nur unzureichend gegenüber Wettereinflüssen geschützt sind.

Das deutsche Gebrauchsmuster DE 93 15 021 U1 zeigt einen Kindertransportanhänger für Fahrräder mit einem zusammenklappbaren Rohrgestell und zwei in Fahrtrichtung hintereinander angeordneten Kindersitzen.

Das deutsche Gebrauchsmuster DE 93 19 316 U1 betrifft einen Zweiradanhänger zum Transport von maximal zwei Kindern, wobei die Sitzposition so gewählt ist, dass die Kinder mit den Rücken zueinander sitzen, und dass sich unter den Sitzen ein Stauraum für Gepäck befindet.

Aus dem deutschen Gebrauchsmuster DE 91 12 906 U1 ist weiterhin ein Fahrradanhänger zum Transport von Kindern mit einem Fahrgestell bekannt, wobei an dem Fahrgestell hintereinander wenigstens zwei Haltestreben vorgesehen sind, an denen Schalensitze lösbar befestigt sind. Eine Aufgabe der vorliegenden Erfindung ist es daher, einen Fahrradanhänger mit einem für Befugte leicht zugänglichen, einfach handhabbaren und flexibel einsetzbaren Stauraum bereitzustellen.

Zumindest eine dieser Aufgaben wird gemäß Anspruch 1 durch einen Fahrradanhänger der eingangs genannten Art gelöst, wobei die Rückenlehne die Fahrgastzelle in einen ersten Bereich und einen zweiten Bereich unterteilt, wobei die Vorderseite der Rückenlehne dem ersten Bereich der Fahrgastzelle und die Rückseite der Rückenlehne dem zweiten Bereich der Fahrgastzelle zugewandt ist, wobei ein formstabiler Transportbehälter vollständig in dem zweiten Bereich der Fahrgastzelle angeordnet und lösbar mit dem Rahmengestell verbunden ist, wobei der Transportbehälter den zweiten Bereich der Fahrgastzelle passgenau ausfüllt.

Im Sinne der vorliegenden Erfindung bildet die Fahrgastzelle einen die darin befindlichen Personen oder Güter umgebenden, aus dem Rahmengestell gebildeten Käfig, der dem Schutz der darin befindlichen Insassen oder Güter dient. Insbesondere ist die Fahrgastzelle dafür ausgelegt, dass die darin befindlichen Personen oder Güter auf allen Seiten des Fahrradanhängers durch das Rahmengestell geschützt sind.

Ein vollständig in dem zweiten Bereich der Fahrgastzelle angeordneter Transportbehälter ist durch das die Fahrgastzelle bildende Rahmengestell geschützt. Durch die Anordnung des Transportbehälters in dem zweiten Bereich der Fahrgastzelle wird darüber hinaus der Sitzkomfort der Insassen in dem ersten Bereich der Fahrgastzelle nicht beeinträchtigt. Die lösbare Verbindung des Transportbehälters mit dem Rahmengestell verhindert, dass sich der Transportbehälter ungewollt in der Fahrgastzelle bewegen oder verloren gehen kann. Weiter ist dem Transportbehälter durch die lösbare Befestigung mit dem Rahmengestell ein vorbestimmter Platz in der Fahrgastzelle zugeordnet, sodass ohne zu suchen auf den Transportbehälter zugegriffen werden kann. Durch die lösbare Verbindung mit dem Rahmgenstell ist es ferner möglich, dass der Transportbehälter getrennt von dem Fahrradanhänger benutzt und beispielsweise die darin befindlichen Einkäufe zusammen mit dem Transportbehälter in das Haus oder die Wohnung getragen werden können.

Erfindungsgemäß füllt der Transportbehälter den zweiten Bereich der Fahrgastzelle passgenau aus. Ist der Transportbehälter auf den in dem Bereich der Fahrgastzelle vorhandenen Raum abgestimmt, entsprechen also die Außenmaße des Transportbehälters den Innenmaßen des zweiten Bereichs, ist der zur Verfügung stehende Raum zwischen der Rückseite der Rückenlehne und dem Rahmengestellt optimal durch den Transportbehälter ausgefüllt.

Für ein leichtes Befüllen und Entleeren ist der Transportbehälter formstabil. Im Sinne der vorliegenden Erfindung ist ein Transportbehälter "formstabil", wenn er nach einer Verformung in seine Ursprungsform zurückkehrt und nicht in sich zusammenfällt. Um seine

Ursprungsform beizubehalten bzw. nicht in sich zusammenzufallen, kann der Transportbehälter Mittel zum Beibehalten seiner Ursprungsform, wie beispielsweise ein Spanngerüst, ein Korsett oder Einlegeteile, aufweisen.

In einer Ausführungsform weist der Transportbehälter eine textile Außenhaut auf oder ist aus einem textilen Material gefertigt. Im Vergleich zu anderen Werkstoffen ist ein textiles Material dehnbar, leicht und waschbar. Ein Transportbehälter mit einer textilen Außenhaut oder ein Transportbehälter, der aus einem textilen Material gefertigt ist, ist leichter zu transportieren und flexibler einsetzbar als ein Transportbehälter mit steifen Wänden aus beispielsweise Hartschalen.

In einer Ausführungsform ist der Transportbehälter zusammenlegbar und/oder zusammenfaltbar. Ein zusammenlegbarer und/oder zusammenfaltbarer Transportbehälter kann platzsparend verstaut oder transportiert werden. Insbesondere wenn der Fahrradanhänger zusammenfaltbar ist, ist es von Vorteil, wenn der lösbar mit dem Rahmengestell verbindbare Transportbehälter ebenfalls zusammenlegbar und/oder zusammenfaltbar ist. Auf diese Weise kann der Transportbehälter zusammen mit dem Fahrradanhänger, d.h. in einem Zustand in dem der Transportbehälter mit dem Rahmengestell des Fahrradanhängers verbunden ist, zusammengelegt und/oder zusammengefaltet werden.

In einer Ausführungsform weist der Transportbehälter eine Öffnung mit einem Öffnungsquerschnitt auf, wobei in einem Zustand in dem der Transportbehälter in dem zweiten Bereich der Fahrgastzelle angeordnet und mit dem Rahmengestell verbunden ist, der Öffnungsquerschnitt maximiert ist. Im Sinne der vorliegenden Erfindung ist ein Öffnungsquerschnitt maximiert, wenn der Öffnungsquerschnitt des Transportbehälters in einem Zustand in dem Transportbehälter in dem zweiten Bereich der Fahrgastzelle angeordnet und mit dem Rahmengestell verbunden ist, nicht vergrößert werden kann, ohne den Transportbehälter zu beschädigen.

In einer Ausführungsform ist der maximierte Öffnung in einem Zustand in dem der Transportbehälter in den zweiten Bereich der Fahrgastzelle angeordnet und mit dem Rahmengestell verbunden ist, von außerhalb der Fahrgastzelle zugänglich. Ist die Öffnung des Transportbehälters von außerhalb der Fahrgastzelle zugänglich, kann der Transportbehälter in seinem an dem Rahmengestell befestigten Zustand befüllt oder entleert werden ohne zunächst von dem Rahmengestell gelöst zu werden. Damit Gegenstände in dem Transportbehälter geschützt sind und/oder nicht verloren gehen, ist die Öffnung des Transportbehälters in einer Ausführungsform verschließbar.

Für eine einfaches Befestigen und Lösen des Transportbehälters an bzw. von dem Rahmengestell in dem zweiten Bereich der Fahrgastzelle, weist die lösbare Befestigung des Transportbehälters mit dem Rahmengestell einen Klettverschluss und/oder eine Öse und/oder ein Seil und/oder eine Druckknopf und/oder einen Reißverschluss und/oder einen Haken und/oder eine Schlaufe auf.

In einer Ausführungsform ist der Transportbehälter in das Rahmengestell eingehängt.

Zum Schutz des Transportbehälters vor Witterungseinflüssen, wie beispielsweise eine übermäßige Sonneneinstrahlung oder Regen, weist das Rahmengestell in einer Ausführungsform eine Außenhaut, vorzugsweise eine Bespannung auf, die die Fahrgastzelle umgibt, wobei die Außenhaut oder die Bespannung eine Öffnung aufweist, durch die der Transportbehälter in der Fahrgastzelle zugänglich ist, wobei vorzugsweise die Öffnung in der Außenhaut oder der Bespannung verschließbar ist. Vorzugsweise ist durch die Öffnung in der Außenhaut oder der Bespannung die Öffnung des Transportbehälters zugänglich. Durch eine in der Außenhaut oder der Bespannung vorgesehene Öffnung kann auf den Transportbehälter in einem Zustand, in dem der Transportbehälter an in dem zweiten Bereich der Fahrgastzelle angeordnet und mit dem Rahmengestell befestigt ist, zugegriffen werden, ohne dass die Außenhaut oder die Bespannung von dem Rahmengestell entfernt werden muss. Ist die Öffnung in der Außenhaut oder der Bespannung verschließbar, ist der Schutz des Transportbehälters durch die Öffnung in der Außenhaut oder der Bespannung nicht beeinträchtigt.

Weitere Vorteile, Merkmale und Anwendungsmöglichkeiten der vorliegenden Erfindung werden anhand der vorliegenden Beschreibung einer Ausführungsform und der dazugehörigen Figuren deutlich, wobei gleiche Bezugszeichen auf gleiche Elemente verweisen. Es zeigen:
- Figur 1: eine perspektivische Seitenansicht eines Fahrradanhängers gemäß einer ersten Ausführungsform der vorliegenden Erfindung von schräg hinten mit einem vollständig in dem zweiten Bereich der Fahrgastzelle angeordneten Transportbehälter,
- Figur 2: eine perspektivische Seitenansicht des Fahrradanhängers gemäß Figur 1 mit einem zu Anschauungszwecken nur teilweise in dem zweiten Bereich der Fahrgastzelle angeordneten Transportbehälter,
- Figur 3: eine Seitenansicht des Fahrradanhängers gemäß Figur 1, und
- Figur 4: eine Seitenansicht des Fahrradanhängers gemäß Figur 2.

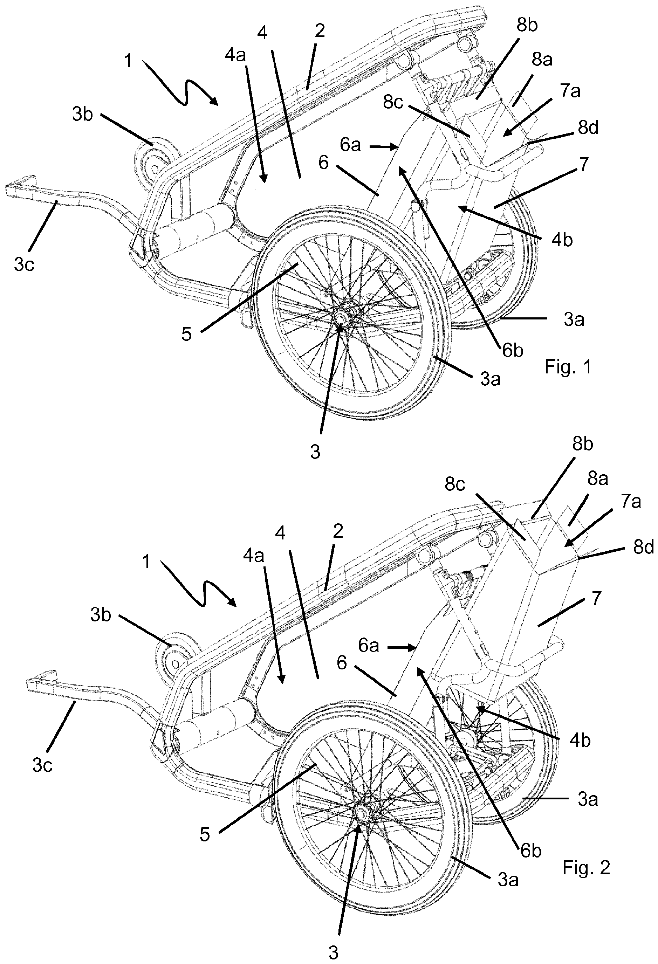

Die Figuren 1 bis 4 zeigen einen Fahrradanhänger 1 gemäß einer ersten Ausführungsform der vorliegenden Erfindung. Der Fahrradanhänger 1 hat ein Rahmengestell 2 und eine Radaufhängung 3. Mit der Radaufhängung 3 sind zwei Hinterräder 3a verbunden. Weiter weist der Fahrradanhänger 1 noch ein Vorderrad 3b und eine Deichsel 3c auf. Der Fahrradanhänger 1 ist ein 2-in-1-Kinderwagen-Fahrradanhänger, der sowohl an der Deichsel 3c mit einem Fahrrad verbindbar als auch als Kinderwagen schiebbar ist. Wird der Fahrradanhänger 1 als Kinderwagen genutzt, wird das Vorderrad 3c zusätzlich zu den zwei Hinterrädern 3a mit einer Fahrbahn in Eingriff gebracht.

Das Rahmengestell 2 bildet eine Fahrgastzelle 4 in der ein Sitz 5 angeordnet ist. Der Sitz 5 ist in den Figuren 1 bis 4 lediglich schematisch dargestellt. Der Sitz 5 hat eine Rückenlehne 6 mit einer Vorderseite 6a und einer Rückseite 6b. Die Rückenlehne 6 unterteilt die Fahrgastzelle 4 in einen ersten Bereich 4a und einen zweiten Bereich 4b. Die Vorderseite 6a der Rückenlehne 6 ist dem ersten Bereich 4a und die Rückseite 6b der Rückenlehne ist dem zweiten Bereich 4b der Fahrgastzelle 4 zugewandt. Der erste Bereich 4a der Fahrgastzelle dient in erster Linie dem Transport von Personen, die auf dem Sitz 5 platznehmen können.

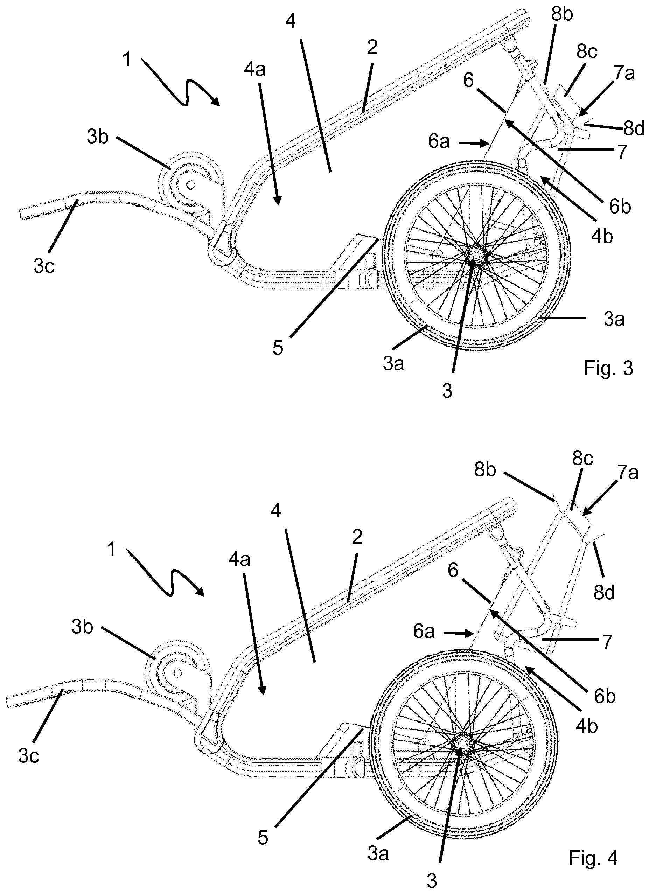

Ein Transportbehälter 7 ist vollständig in dem zweiten Bereich 4b der Fahrgastzelle 4 angeordnet und lösbar mit dem Rahmengestell 2 verbunden. Wird die Verbindung zwischen dem Transportbehälter 7 und dem Rahmengestell 2 gelöst, kann der Transportbehälter 7 aus dem zweiten Bereich 4b der Fahrgastzelle 4 entnommen und unabhängig von dem Fahrradanhänger 1 benutzt werden. Die Entnehmbarkeit des Transportbehälters 7 aus dem zweiten Bereich 4b der Fahrgastzelle 4 ist in den Figuren 2 und 4 angedeutet.

Insbesondere in den Figuren 2 und 4 ist außerdem gut erkennbar, dass die Außenmaße des Transportbehälters 7 an die Innenmaße des zweiten Bereiches 4b der Fahrgastzelle 4 angepasst sind, sodass der Transportbehälter 7 den in dem zweiten Bereich 4b der Fahrgastzelle 4 zur Verfügung stehenden Raum ausfüllt. Ist der Transportbehälter 7 in dem zweiten Bereich 4b der Fahrgastzelle 4 angeordnet und mit dem Rahmengestell 2 verbunden, befindet sich der Transportbehälter 7 vollständig in dem zweiten Bereich 4b der Fahrgastzelle 4. Der in den Figuren 1 bis 4 gezeigte Deckel 8 besteht aus vier Teilabschnitten 8a, 8b, 8c, und 8d. Die vier Teilabschnitte 8a bis 8d können zum Verschließen der in dem Transportbehälter 7 befindlichen Öffnung 7a umgeklappt werden, sodass der Deckel 8 als Bestandteil des Transportbehälters 7 vollständig in dem zweiten Bereich 4b der Fahrgastzelle 4 angeordnet ist.

Der Öffnungsquerschnitt der Öffnung 7a ist in dem in den Figuren 1 und 3 gezeigten Zustand, d.h. in einem Zustand in dem der Transportbehälter 7 vollständig in dem zweiten Bereich 4b der Fahrgastzelle 4 angeordnet und mit dem Rahmengestell 2 verbunden ist, maximiert. Die Öffnung 7a ist von außerhalb der Fahrgastzelle 4 zugänglich.

Der Transportbehälter 7 ist formstabil aus einem textilen Material gefertigt. Wird die Verbindung zwischen dem Transportbehälter 7 und dem Rahmgestell 2 gelöst, kann der Transportbehälter 7 zusammengefaltet werden.

### Bezugszeichenliste:

- 1: Fahrradanhänger
- 2: Rahmengestell
- 3: Radaufhängung
- 3a: Hinterrad
- 3b: Vorderrad
- 3c: Deichsel
- 4: Fahrgastzelle
- 4a: erster Bereich der Fahrgastzelle
- 4b: zweiter Bereich der Fahrgastzelle
- 5: Sitz
- 6: Rückenlehne
- 6a: Vorderseite der Rückenlehne
- 6b: Rückseite der Rückenlehne
- 7: Transportbehälter
- 7a: Öffnung des Transportbehälters
- 8: Deckel zum Verschließen der Öffnung 7a
- 8a-d: Teilabschnitte des Deckels

## Patentansprüche

1. Fahrradanhänger (1), vorzugsweise ein 2-in-1-Kinderwagen-Fahrradanhänger, mit einem Rahmengestell (2) und einer Radaufhängung (3), wobei das Rahmengestell (2) eine Fahrgastzelle (4) bildet und in der Fahrgastzelle (4) ein Sitz (5) mit einer Rückenlehne (6) angeordnet ist, wobei die Rückenlehne (6) eine Vorderseite (6a) und eine Rückseite (6b) aufweist, wobei die Rückenlehne (6) die Fahrgastzelle (4) in einen ersten Bereich (4a) und einen zweiten Bereich (4b) unterteilt, wobei die Vorderseite (6a) der Rückenlehne (6) dem ersten Bereich (4a) der Fahrgastzelle (4) und die Rückseite (6b) der Rückenlehne (6) dem zweiten Bereich (4b) der Fahrgastzelle (4) zugewandt ist, wobei ein formstabiler Transportbehälter (7) vollständig in dem zweiten Bereich (4b) der Fahrgastzelle (4) angeordnet und lösbar mit dem Rahmengestell (2) verbunden ist, **dadurch gekennzeichnet, dass** der Transportbehälter (7) den zweiten Bereich (4b) der Fahrgastzelle (4) passgenau ausfüllt.

2. Fahrradanhänger (1) nach Anspruch 1, **dadurch gekennzeichnet, dass** der Transportbehälter (7) eine textile Außenhaut aufweist.

3. Fahrradanhänger (1) nach einem der Ansprüche 1 oder 2, **dadurch gekennzeichnet, dass** der Transportbehälter (7) zusammenlegbar und/oder zusammenfaltbar ist.

4. Fahrradanhänger (1) nach einem der Ansprüche 1 bis 3, **dadurch gekennzeichnet, dass** der Transportbehälter (7) eine Öffnung (7a) mit einem Öffnungsquerschnitt aufweist, wobei in einem Zustand in dem der Transportbehälter (7) in dem zweiten Bereich (4b) der Fahrgastzelle (4) angeordnet und mit dem Rahmengestell (2) verbunden ist, der Öffnungsquerschnitt maximiert ist.

5. Fahrradanhänger (1) nach Anspruch 4, **dadurch gekennzeichnet, dass** der maximierte Öffnungsquerschnitt des Transportbehälters (7) in einem Zustand in dem der Transportbehälter in dem zweiten Bereich (4b) der Fahrgastzelle (4) angeordnet und mit dem Rahmengestell (2) verbunden ist, von außerhalb der Fahrgastzelle (4) zugänglich ist.

6. Fahrradanhänger (1) nach einem der Ansprüche 1 bis 5, **dadurch gekennzeichnet, dass** die lösbare Verbindung des Transportbehälters (7) mit dem Rahmengestell (2) einen Klettverschluss und/oder eine Öse und/oder ein Seil und/oder einen Druckknopf und/oder einen Reißverschluss und/oder einen Haken und/oder eine Schlaufe aufweist.

7. Fahrradanhänger (1) nach einem der Ansprüche 1 bis 6, **dadurch gekennzeichnet, dass** der Transportbehälter (7) in das Rahmengestell (2) eingehängt ist.

8. Fahrradanhänger (1) nach einem der Ansprüche 1 bis 7, **dadurch gekennzeichnet, dass** das Rahmengestell (2) eine Außenhaut, vorzugsweise eine Bespannung, aufweist, die die Fahrgastzelle (4) umgibt, wobei die Außenhaut oder die Bespannung eine Öffnung aufweist, durch die der Transportbehälter (7) in der Fahrgastzelle (4) zugänglich ist, wobei vorzugsweise die Öffnung in der Außenhaut oder der Bespannung verschließbar ist.

## Claims

1. A bicycle trailer (1), preferably a 2-in-1 stroller-bicycle trailer, with a frame (2) and a wheel suspension (3), wherein the frame (2) forms a passenger compartment (4) and a seat (5) having a back rest (6) is disposed in the passenger compartment (4), wherein the back rest (6) has a front (6a) and a back (6b), wherein the back rest (6) divides the passenger compartment (4) into a first region (4a) and a second region (4b), wherein the front (6a) of the back rest (6) faces the first region (4a) of the passenger compartment (4) and the back (6b) of the back rest (6) faces the second region (4b) of the passenger compartment (4), wherein the entirety of a dimensionally stable transport container (7) is disposed in the second region (4b) of the passenger compartment (4) and is releasably attached to the frame (2), **characterized in that** the transport container (7) fits exactly into and fills the second region (4b) of the passenger compartment (4).

2. The bicycle trailer (1) according to claim 1, **characterized in that** the transport container (7) has a textile outer shell.

3. The bicycle trailer (1) according to claim 1 or claim 2, **characterized in that** the transport container (7) is collapsible and/or foldable.

4. The bicycle trailer (1) according to one of claims 1 to 3, **characterized in that** the transport container (7) has an opening (7a) with an opening cross section, wherein in a situation in which the transport container (7) is disposed in the second region (4b) of the passenger compartment (4) and is attached to the frame (2), the opening cross section is maximized.

5. The bicycle trailer (1) according to claim 4, **characterized in that** in a situation in which the transport container is disposed in the second region (4b) of the passenger compartment (4) and attached to the frame (2), the maximized opening cross section of the transport container (7) is accessible from outside the passenger compartment (4).

6. The bicycle trailer (1) according to one of claims 1 to 5, **characterized in that** the releasable attachment of the transport container (7) to the frame (2) is a hook and loop closure and/or an eyelet and/or a cord and/or a press stud and/or a zip fastener and/or a hook and/or a strap.

7. The bicycle trailer (1) according to one of claims 1 to 6, **characterized in that** the transport container (7) is mounted in the frame (2).

8. The bicycle trailer (1) according to one of claims 1 to 7, **characterized in that** the frame (2) has an outer shell, preferably a cover, which surrounds the passenger compartment (4), wherein the outer shell or the cover has an opening through which the transport container (7) in the passenger compartment (4) is accessible, wherein preferably, the opening in the outer shell or in the cover can be closed.

## Revendications

1. Remorque de bicyclette (1), de préférence une remorque de bicyclette pour enfants 2-en-1, comportant un cadre (2) et une suspension (3), le cadre (2) formant un habitacle (4) et un siège (5) avec un dossier (6) étant agencé dans l'habitacle (4), le dossier (6) présentant une face avant (6a) et une face arrière (6b), le dossier (6) divisant l'habitacle (4) en une première zone (4a) et une seconde zone (4b), la face avant (6a) du dossier (6) étant tournée vers la première zone (4a) de l'habitacle (4) et la face arrière (6b) du dossier (6) étant tournée vers la seconde zone (4b) de l'habitacle (4), un conteneur de transport (7) indéformable étant agencé complètement dans la seconde zone (4b) de l'habitacle (4) et étant relié de manière amovible au cadre (2), **caractérisée en ce que** le conteneur de transport (7) remplit de manière précise la seconde zone (4b) de l'habitacle (4).

2. Remorque de bicyclette (1) selon la revendication 1, **caractérisée en ce que** le conteneur de transport (7) comprend un revêtement extérieur textile.

3. Remorque de bicyclette (1) selon la revendication 1 ou 2, **caractérisée en ce que** le conteneur de transport (7) est repliable et/ou pliable.

4. Remorque de bicyclette (1) selon l'une quelconque des revendications 1 à 3, **caractérisée en ce que** le conteneur de transport (7) comprend une ouverture (7a) avec une section transversale d'ouverture, la section transversale d'ouverture étant maximisée dans un état dans lequel le conteneur de transport (7) est agencé dans la seconde zone (4b) de l'habitacle (4) et est relié au cadre (2).

5. Remorque de bicyclette (1) selon la revendication 4, **caractérisée en ce que** la section d'ouverture maximale du conteneur de transport (7) est accessible depuis l'extérieur de l'habitacle (4) dans un état dans lequel le conteneur de transport est agencé dans la seconde zone (4b) de l'habitacle (4) et est relié au cadre (2).

6. Remorque de bicyclette (1) selon l'une quelconque des revendications 1 à 5, **caractérisée en ce que** la liaison amovible du conteneur de transport (7) au cadre (2) comprend une fermeture à crochets et boucles et/ou un œillet et/ou un câble et/ou un bouton-poussoir et/ou une fermeture à glissière et/ou un crochet et/ou une sangle.

7. Remorque de bicyclette (1) selon l'une quelconque des revendications 1 à 6, **caractérisée en ce que** le conteneur de transport (7) est accroché dans le cadre (2).

8. Remorque de bicyclette (1) selon l'une quelconque des revendications 1 à 7, **caractérisée en ce que** le cadre (2) comprend un revêtement extérieur, de préférence une toile, qui entoure l'habitacle (4), le revêtement extérieur ou la toile comprenant une ouverture à travers laquelle le conteneur de transport (7) est accessible dans l'habitacle (4), l'ouverture dans le revêtement extérieur ou la toile pouvant de préférence être fermée.
